# EUROPEAN PATENT APPLICATION

(11) **EP 4 663 531 A1**
(43) Date of publication of application: **17.12.2025**
(21) Application number: 24753539.6
(22) Date of filing: 31.01.2024
(51) Int. Cl.: B63B 17/00, B63B 25/16, F25J 1/00, F25J 1/02

(54) **SYSTEM AND METHOD FOR RE-LIQUEFYING AMMONIA BOIL-OFF GAS OF VESSEL**

(30) Priority: 10.02.2023 KR 20230017786; 27.02.2023 KR 20230026107
(71) Applicant: Hanwha Ocean Co., Ltd., Geoje-si, Gyeongsangnam-do 53302 (KR)
(72) Inventor: JEONG, Seong Kyu, Geoje-si, Gyeongsangnam-do 53307 (KR); KIM, Yu Jin, Busan 48744 (KR); YANG, Dae Won, Geoje-si, Gyeongsangnam-do 53296 (KR); PARK, Young Jun, Geoje-si, Gyeongsangnam-do 53305 (KR); KIM, Hyong Woo, Seoul 03173 (KR); KANG, Dong Eok, Busan 46743 (KR)
(74) Representative: Cabinet Beau de Loménie
(86) International application number: PCT/KR2024/001440
(87) International publication number: WO 2024/167209

(57) **Abstract**

A system and method for reliquefaction of ammonia boil-off gas for ships is disclosed. The ammonia boil-off gas reliquefaction system includes: a compression unit for multistage compression of boil-off gas, the compression unit including a first compressor receiving and compressing boil-off gas generated from ammonia in a storage tank provided to a ship, and a second compressor further compressing the boil-off gas compressed in the first compressor; a condenser cooling the boil-off gas compressed through the compression unit; and a reliquefied gas recovery line along which ammonia cooled and condensed in the condenser is delivered to the storage tank, wherein a temperature of the boil-off gas in the compression unit is adjusted by partially diverting the ammonia from the reliquefied gas recovery line to be supplied to the compression unit.

## Description

### [Technical Field]

The present invention relates to a system and method for reliquefaction of ammonia boil-off gas for ships and, more particularly, to a system and method for reliquefaction of ammonia boil-off gas for ships, which reliquefies ammonia boil-off gas through compression and cooling of the boil-off gas generated from ammonia storage tanks in a ship that uses ammonia as a fuel for on-board engines.

### [Background Art]

As global warming intensifies, various efforts have been made around the world to reduce greenhouse gas emissions. After the 1997 Kyoto Protocol, which committed developed countries to reducing greenhouse gases, expired in 2020, the 195 parties to the Paris Climate Change Accord, adopted at the 21st Conference of the Parties to the United Nations Convention on Climate Change in Paris, France, in December 2015 and entering into force in November 2016, agreed to make various efforts to reduce greenhouse gas emissions.

Along with such global trend, there is increasing interest in renewable energy (or renewed energy), such as wind power, photovoltaic power, solar thermal power, bioenergy, tidal power, geothermal energy, and the like, as non-polluting energy that can replace fossil fuels and nuclear power, and various technologies are being developed in the art.

Liquefied gases, including liquefied natural gas can eliminate or reduce air pollutants in a liquefaction process and thus can be considered an environmentally friendly fuel that provides low air pollutant emissions during combustion. As a result, in recent years, consumption of liquefied gases, such as liquefied natural gas (LNG), liquefied petroleum gas (LPG) and the like, has been rapidly increasing around the world. Liquefied gases obtained at cryogenic temperatures have a much smaller volume than gases, thereby providing an advantage of improving efficiency in storage and transportation.

Liquefied natural gas (LNG) is a colorless transparent liquid obtained through liquefaction of natural gas mainly composed of methane by cooling the natural gas to about -162°C and has a volume of about 1/600 that of the natural gas. Thus, natural gas is liquefied for efficient transportation.

Although liquefied petroleum gas (LPG) has different liquefaction temperatures depending on the composition thereof, a petroleum gas mainly composed of propane can be liquefied at a low temperature of about -42°C at normal pressure and can be stored in a liquid state at a temperature of up to about 45°C at 18 bar and at a temperature of up to 20°C at 7 bar.

On the other hand, conventional LPG carriers adopt a fuel supply system that employs heavy fuel oil, such as bunker C oil and the like, which is relatively inexpensive as a propulsion fuel for ships. However, due to strengthening of international emission regulations on use of heavy fuel oil, it is necessary for the fuel supply system to employ a separate fuel tank (LSHFO tank) for storage of heavy oil with low sulfur content and there is increasing demand for an eco-friendly fuel supply system that meets international environmental regulations.

In recent years, there has been increase in application of fuel supply systems that employ LPG or LNG and boil-off gas generated therefrom as a propulsion fuel for LPG or LNG carriers and, with the trend of strengthening the international emission regulations, the number of ships using LNG and the like as a propulsion fuel is increasing, including not only LPG or LNG carriers but also general ships.

Examples of a ship engine capable of being fueled by natural gas include gasfueled engines, such as a DFDE, an X-DF engine, and an ME-GI engine.

The DFDE is a four stroke engine and adopts an Otto cycle, in which natural gas at a relatively low pressure of about 5.5 barg is injected into a combustion air inlet and compressed by a piston moving upward.

The X-DF engine is a two stroke engine, which is fueled by natural gas at a pressure of about 15 barg and adopts an Otto cycle.

The ME-GI engine is a two stroke engine and adopts a diesel cycle, in which natural gas at a high pressure of about 300 barg is injected directly into a combustion chamber near the top dead point of a piston.

However, although LNG is considered a cleaner fuel than other fossil fuels used in typical ships, LNG still produces carbon dioxide when burned and LNG-fueled ships emit carbon dioxide during operation.

### [Disclosure]

### [Technical Problem]

As a specialized agency of the United Nations established to standardize international shipping routes, traffic rules, port facilities, and other related matters, the International Maritime Organization (IMO) has proposed a target of 50% reduction in greenhouse gases by 2050 and 100% reduction by 2100 (GHG, Zero Emission) compared to 2008, and it is anticipated that regulations in various countries and regions will be strengthened.

According to the Energy Efficiency Design Index (EEDI), which is the IMO's mandatory carbon dioxide reduction regulation for newbuilding of ships, the initial EEDI announcement called for EEDI Phase 1, which requires a 10% reduction in carbon dioxide emission starting in 2015, based on carbon dioxide emission from 2013 to 2014, and EEDI Phase 3 was scheduled to be applied in 2025 through a onestep increase every five years. However, for LPG carriers, EEDI Phase 3 is to be applied early from 2022, two years after application of EEDI Phase 2. As regulations on carbon dioxide emissions from ships are rapidly tightening, it can be difficult to achieve regulation on carbon dioxide emission using only LNG or LPG as fuel in the future.

As a result, various studies have been made on eco-friendly ship fuels that can reduce carbon dioxide emissions, and recently, technologies for ship engines that can use ammonia as fuel together with other types of fuels, such as LNG or LPG, have been researched and developed.

Ammonia (NH3) is a substance with three hydrogen atoms bonded to one nitrogen atom, and can form strong hydrogen bonds between molecules, thereby allowing easy liquefaction thereof. Ammonia has a boiling point of -33.34°C and a melting point of -77.73°C at standard temperature and pressure.

Since ammonia is easier to store than LNG and emits no carbon dioxide despite slightly lower specific energy and energy density than HFO, ammonia has attracted attention as an eco-friendly ship fuel in response to tightening international standards for greenhouse gas emissions.

Since ammonia has a boiling point of -33.34°C, which is higher than the boiling point of LNG and is still higher than room temperature, storage tanks configured to store ammonia for use as ship fuel produce boil-off gas.

It is an aspect of the present invention to provide technology capable of effectively liquefying boil-off gas generated from ammonia to be supplied as fuel to prevent fuel waste while safely maintaining the pressure of a storage tank.

### [Technical Solution]

In accordance with one aspect of the present invention, there is provided a system for reliquefaction of ammonia boil-off gas for ships, including: a compression unit for multistage compression of boil-off gas, the compression unit including a first compressor receiving and compressing boil-off gas generated from ammonia in a storage tank provided to a ship, and a second compressor further compressing the boil-off gas compressed in the first compressor;
a condenser cooling the boil-off gas compressed through the compression unit; and
a reliquefied gas recovery line along which ammonia cooled and condensed in the condenser is delivered to the storage tank,
wherein a temperature of the boil-off gas in the compression unit is adjusted by partially diverting the ammonia from the reliquefied gas recovery line to be supplied to the compression unit.

Preferably, the system further includes: a temperature regulation line along which the ammonia is partially diverted from the reliquefied gas recovery line and is delivered as boil-off gas to the second compressor after compression in the first compressor; a heat exchanger provided to the reliquefied gas recovery line and further cooling the ammonia condensed in the condenser; and a first pressure relief valve provided to the temperature regulation line and depressurizing the ammonia diverted from the reliquefied gas recovery line, wherein the ammonia depressurized in the first pressure relief valve is mixed with the boil-off gas downstream of the first compressor after heat exchange with the ammonia in the liquefied gas recovery line through the heat exchanger.

Preferably, the first pressure relief valve is controlled in a cascade control manner by comparing an ammonia discharge temperature downstream of the first pressure relief valve on the temperature regulation line with an ammonia discharge temperature downstream of the heat exchanger on the liquefied gas recovery line.

Preferably, the compression unit is a three-stage compressor further including a third compressor receiving and compressing the boil-off gas compressed through the first and second compressors, and the system further include an intercooler cooling the compressed boil-off gas received from the second compressor and supplying the cooled boil-off gas to the third compressor.

Preferably, the system further includes: a side streamline along which the ammonia is partially diverted from the reliquefied gas recovery line and is delivered as boil-off gas to the first compressor of the compression unit; a heat exchanger provided to the reliquefied gas recovery line and further cooling the ammonia condensed in the condenser; and a first pressure relief valve provided to the side streamline and depressurizing the ammonia diverted from the reliquefied gas recovery line, wherein the ammonia depressurized in the first pressure relief valve is mixed with the boil-off gas upstream of the first compressor after heat exchange with the ammonia in the liquefied gas recovery line through the heat exchanger and is then fed to the first compressor.

Preferably, the first pressure relief valve is controlled in a cascade control manner by comparing an ammonia discharge temperature downstream of the first pressure relief valve on the side streamline with an ammonia discharge temperature downstream of the heat exchanger on the liquefied gas recovery line.

Preferably, the system further includes: an intercooler cooling the compressed boil-off gas received from the second compressor and supplying the cooled boil-off gas to the second compressor.

Preferably, the system further includes: a receiver disposed between the condenser and the heat exchanger in the reliquefied gas recovery line and receiving the ammonia cooled in the condenser; a vent line along which a gas separated from the receiver is discharged; and a control valve provided to the vent line, wherein the control valve is controlled according to an ammonia liquid level detected in the receiver to regulate the ammonia liquid level in the receiver.

Preferably, the system further includes: a second pressure relief valve provided to the reliquefied gas recovery line and depressurizing the ammonia further cooled through the heat exchanger, wherein the second pressure relief valve is controlled depending on a value selected from among an ammonia discharge pressure downstream of the compression unit and an ammonia pressure upstream of the second pressure relief valve.

Preferably, the system further includes: a knock-out drum receiving the boil-off gas discharged from the storage tank and supplying a gas component of the boil-off gas to the first compressor of the compression unit, wherein a liquid contained in the boil-off gas is separated by and discharged from the knock-out drum.

In accordance with another aspect of the present invention, there is provided a method for reliquefying ammonia boil-off gas for ships, including: compressing boil-off gas generated from ammonia in a storage tank of a ship through multistage compression by a compression unit including a first compressor and a second compressor;
condensing, by a condenser, the boil-off gas compressed through the compression unit, followed by delivering the condensed boil-off gas to the storage tank along a reliquefied gas recovery line; and
partially diverting the ammonia from the reliquefied gas recovery line to supply the ammonia to the compression unit to regulate a temperature of the boil-off gas in the compression unit.

Preferably, the ammonia in the reliquefied gas recovery line is partially diverted along a temperature-regulating line and is delivered as boil-off gas to the second compressor after compression in the first compressor to regulate the temperature of the boil-off gas introduced into the second compressor; the reliquefied gas recovery line is provided with a heat exchanger further cooling the ammonia condensed in the condenser; the temperature-regulating line branches off from the reliquefied gas recovery line upstream of the heat exchanger; and the ammonia diverted along the temperature-regulating line is depressurized in a first pressure relief valve and is mixed with the boil-off gas downstream of the first compressor after heat exchange with the ammonia in the reliquefied gas recovery line through the heat exchanger.

Preferably, the ammonia in the liquefied gas recovery line is partially diverted along a side streamline and is delivered as boil-off gas to the first compressor of the compression unit to regulate the temperature of the boil-off gas fed to the compression unit; the liquefied gas recovery line is provided with a heat exchanger further cooling the ammonia condensed in the condenser; the side streamline branches off from the reliquefied gas recovery line upstream of the heat exchanger, and the ammonia diverted along the side streamline is depressurized in a first pressure relief valve and is mixed with the boil-off gas upstream of the compression unit and fed to the first compressor after heat exchange with the ammonia in the reliquefied gas recovery line through the heat exchanger.

Preferably, the first pressure relief valve is controlled in a cascade control manner by comparing an ammonia discharge temperature downstream of the first pressure relief valve with an ammonia discharge temperature downstream of the heat exchanger on the liquefied gas recovery line.

### [Advantageous Effects]

Embodiments of the present invention provide an ammonia boil-off gas reliquefaction system and method capable of reducing greenhouse gas emissions during ship operation while satisfying regulatory standards set by international agreements by supplying ammonia, an environmentally friendly fuel, as fuel for ship engines.

In particular, the ammonia boil-off gas reliquefaction system according to the present invention compresses and cools boil-off gas generated from an ammonia storage tank to reliquefy the boil-off gas, which in turn is recovered or fed as fuel, thereby enabling stable maintenance of the pressure in the storage tank while preventing waste of ammonia fuel.

Furthermore, the ammonia boil-off gas reliquefaction system according to the present invention can maximize heat recovery efficiency of a side stream and can reduce costs for system installation and operation by partially diverting condensed ammonia to be supplied to a heat exchanger and subjected to heat exchange with a main stream of ammonia to be reliquefied, followed by delivering the heat-exchanged ammonia between the first compressor and the second compressor to regulate the temperature of the compressed ammonia boil-off gas or delivering the heat-exchanged ammonia to an upstream side of the compression unit to regulate the temperature of the ammonia boil-off gas to be supplied to the first compressor.

### [Description of Drawings]

FIG. 1 is a schematic diagram of a system for reliquefaction of ammonia boil-off gas for ships according to a first embodiment of the present invention.
FIG. 2 is a schematic diagram of a system for reliquefaction of ammonia boil-off gas for ships according to a second embodiment of the present invention.

### [Best Mode]

In order to fully appreciate the operational advantages of the present invention and the objectives achieved by practicing the present invention, reference should be made to the accompanying drawings, which illustrate preferred embodiments of the present invention, and description thereof.

Hereinafter, exemplary embodiments of the present invention will be described in detail in terms of the features and effects thereof with reference to the accompanying drawings. It should be noted that like components will be denoted by like reference numerals throughout the specification and the accompanying drawings.

As used herein, the term "ship" may refer to any type of ship provided with an engine capable of utilizing ammonia as fuel for an onboard engine and may include self-propelled vessels, such as LPG carriers, LNG carriers, liquid hydrogen carriers, ammonia carriers, container carriers, crude oil carriers, bulk carriers including mineral carriers or grain carries, specialized vessels including offshore wind turbine installation vessels, roll on/roll off (Ro-Ro) vessels, and the like, as well as non-self-propelled floating offshore structures.

Herein, "engine fueled with ammonia" refers to both engines fueled with ammonia alone and engines fueled with ammonia together with other marine fuels, such as LNG, LPG, HFO, MGO, diesel oil, and the like, and includes both propulsion engines and power generation engines of ships. Each of the propulsion engine and the power generation engine may be provided in plural, as needed.

Furthermore, embodiments of the present invention may be applied to a reliquefaction system for any type of liquefied gas that can be delivered in a liquid state through liquefaction at cryogenic temperatures and can generate boil-off gas during storage. For example, such liquefied gas may include liquefied petrochemical gas, such as liquefied natural gas (LNG), liquefied ethane gas (LEG), liquefied petroleum gas (LPG), liquefied ethylene gas, and liquefied propylene gas, and ammonia. In the following embodiments, by way of example, ammonia is used as a typical liquefied gas.

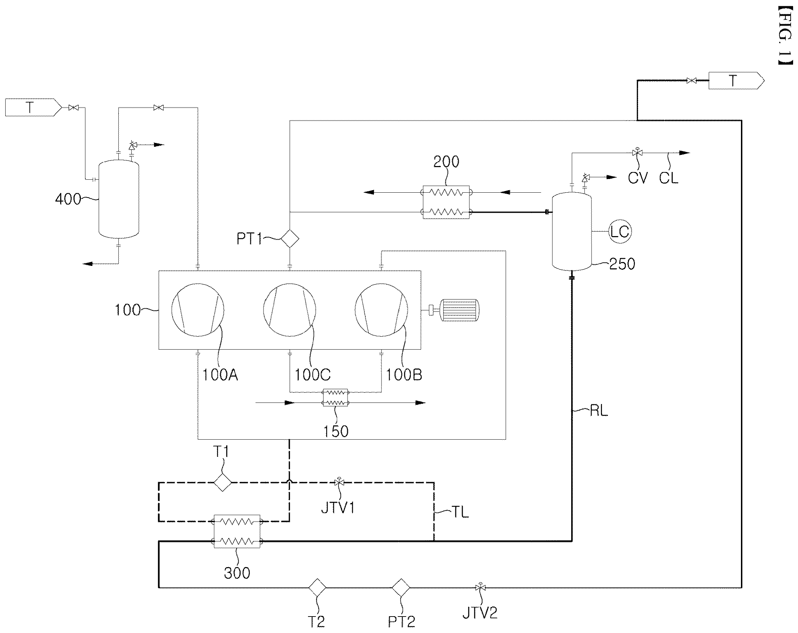

FIG. 1 is a schematic diagram of a system for reliquefaction of ammonia boil-off gas for ships according to a first embodiment of the present invention.

As shown in FIG. 1, the ammonia boil-off gas reliquefaction system according to the first embodiment is configured to reliquefy ammonia boil-off gas generated from a storage tank T, which is provided to a ship and stores ammonia to be supplied as fuel for on-board engines, such that the reliquefied boil-off gas can be returned to the storage tank or supplied as fuel. Since ammonia gas is toxic, classification regulations require increase in design pressure of a storage tank in order to allow operation without venting even at room temperature, or installation of a system capable of treating ammonia boil-off gas generated in the storage tank. The system according to this embodiment is a system capable of treating ammonia boil-off gas through reliquefaction, in which the ammonia boil-off gas generated in the storage tank is delivered to a compression unit 100 through a knock-out drum 400 to be compressed in the compression unit, cooled and condensed in a condenser 200, and recovered through a receiver 250, a heat exchanger 300, and the like.

Referring to FIG. 1, the ammonia boil-off gas reliquefaction system according to this embodiment includes: a compression unit 100 for multistage compression of boil-off gas, which includes a first compressor 100A receiving and compressing boil-off gas generated from ammonia in a storage tank T provided to a ship and a second compressor 100B further compressing the boil-off gas compressed in the first compressor; a condenser 200 cooling the boil-off gas compressed through the compression unit; a reliquefied gas recovery line RL along which ammonia cooled and condensed in the condenser is delivered to the storage tank; and a temperature regulation line (TL) along which the ammonia is partially diverted from the reliquefied gas recovery line and is delivered as boil-off gas to the second compressor after compression in the first compressor.

The ammonia boil-off gas discharged from the storage tank T passes through the knockout drum 400 such that only a gas component of the boil-off gas is supplied to the first compressor 100A of the compression unit. A liquid (condensate) contained in the boil-off gas may be separated by the knockout drum and discharged to a lower side of the knockout drum.

The compression unit 100 may be a three-stage compressor including the first compressor 100A receiving and compressing the boil-off gas, a second compressor 100B further compressing the boil-off gas compressed in the first compressor, and a third compression unit 100C further compressing the boil-off gas compressed in the second compressor and delivering the further compressed boil-off gas to the condenser. The compression unit may be, for example, a three-stage centrifugal compressor including first to third compressors or a three-stage reciprocating compressor with reciprocating pistons. The number of stages of the compression unit may be increased, as needed.

The boil-off gas compressed in the compression unit 100 is supplied to the condenser 200 to be cooled therein. In the condenser 200, the boil-off gas compressed in the compression unit 100 is cooled and reliquefied, for example, through heat exchange with a cold heat source to cool the ammonia boil-off gas.

The ammonia cooled and condensed in the condenser 200 is delivered to the receiver 250 along the reliquefied gas recovery line RL to be received in a subcooled state therein. Since ammonia delivered to the receiver is in a subcooled state, no boil-off gas is generated therefrom, despite generation of some vapors by nitrogen, air, and the like. In the receiver, the gas is separated from the condensed ammonia and vented along a vent line CL and the liquid is delivered to the storage tank along the reliquefied gas recovery line RL.

The vent line CL is provided with a control valve CV, which is controlled according to an ammonia liquid level in the receiver. By controlling the control valve, the gas discharged along the vent line can be adjusted together with the ammonia liquid level inside the receiver.

The reliquefied gas recovery line RL is provided with the heat exchanger 300 downstream of the receiver to further cool the ammonia condensed in the condenser. In the system according to this embodiment, the heat exchanger may be, for example, a plate heat exchanger or a PCHE.

To ensure a cold heat source for the heat exchanger 300, the temperature regulation line TL branches off from the reliquefied gas recovery line RL at an upstream side of the heat exchanger. The temperature regulation line TL is provided with a first pressure relief valve JTV1 to depressurize the ammonia diverted from the reliquefied gas recovery line. An ammonia side stream branched off along the temperature regulation line TL and cooled through depressurization in the first pressure relief valve JTV1 is supplied to the heat exchanger 300, in which the ammonia side stream is subjected to heat exchange with an ammonia main stream flowing along the reliquefied gas recovery line RL. That is, in the heat exchanger 300, the ammonia in the reliquefied gas recovery line RL is subjected to heat exchange with the ammonia that is diverted along the temperature regulation line TL and is cooled by the first pressure relief valve JTV1. The ammonia having passed through the heat exchanger 300 along the temperature regulation line TL is delivered to a downstream side of the first compressor 100A of the compression unit and is mixed with the boil-off gas to be supplied to the second compressor 100B after compression in the first compressor. In the liquefaction system according to this embodiment, cycle efficiency can be maximized by applying a plate heat exchanger or PCHE to cool the ammonia through heat exchange between the side stream and the main stream without quenching operation.

The first pressure relief valve JTV1 may be controlled in a cascade control manner by comparing an ammonia discharge temperature T1 downstream of the first pressure relief valve on the temperature regulation line with an ammonia discharge temperature T2 downstream of the heat exchanger on the liquefied gas recovery line. As a result, the temperature of the boil-off gas introduced into the second compressor after compression in the first compressor can be regulated without a separate intercooler between the first compressor and the second compressor.

Accordingly, the boil-off gas compressed in the first compressor 100A of the compression unit is mixed with the depressurized ammonia to allow temperature regulation after being diverted along the temperature regulation line TL and is then supplied to the second compressor 100B to be compressed therein. An intercooler 150 is disposed between the second compressor and the third compressor in the compression unit such that the boil-off gas compressed in the second compressor can be cooled through the intercooler 150 and supplied to the third compressor. In this way, the reliquefaction system according to this embodiment employs a three-stage compressor, in which a side stream is disposed between the first and second compressors and the intercooler is disposed between the second and third compressors, thereby allowing regulation of the temperature of the boil-off gas while preventing overheating.

The ammonia boil-off gas compressed through the compression unit including the third compressor 100C is supplied to the condenser 200 to be cooled and condensed therein, and passes through the receiver 250 and the heat exchanger 300.

The reliquefied gas recovery line RL is provided with a second pressure relief valve JTV2 that depressurizes the ammonia additionally cooled through the heat exchanger 300. The second pressure relief valve JTV2 is controlled by a pressure value, specifically a pressure value selected from among an ammonia discharge pressure PT1 downstream of the compression unit, that is, at the third compressor, and an ammonia pressure PT2 upstream of the second pressure relief valve.

The ammonia depressurized through the second pressure relief valve JTV2 after being cooled in the heat exchanger 300 can be returned to the storage tank T or can be delivered to a fuel supply line to be directly supplied as engine fuel.

As described above, according to the first embodiment, it is possible to prevent waste of ammonia while maintaining the pressure of the storage tank by reliquefying boil-off gas generated from ammonia to be supplied as fuel. In particular, some of the condensed ammonia is divided and delivered to the heat exchanger to be subjected to heat exchange with a main stream of ammonia to be reliquefied, and is then delivered between the first compressor and the second compressor to regulate the temperature of the compressed ammonia boil-off gas, thereby maximizing cold heat recovery efficiency of the side stream, reducing installation costs through reduction in the number of components in the system, and contributing to securing an on-board space of the ship.

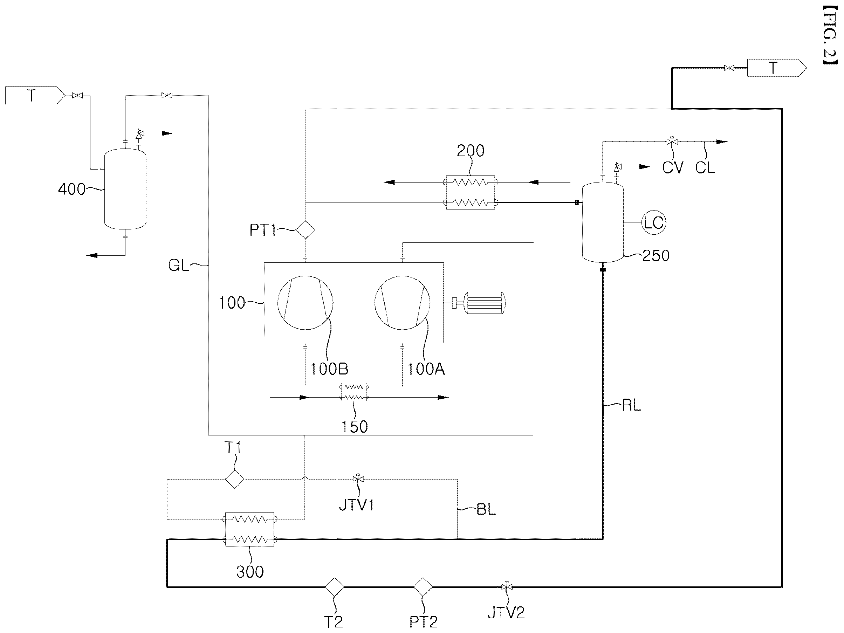

Next, FIG. 2 is a schematic diagram of a system for reliquefaction of ammonia boil-off gas for ships according to a second embodiment of the present invention.

As shown in FIG. 2, the ammonia boil-off gas reliquefaction system according to the second embodiment is configured to reliquefy ammonia boil-off gas generated from a storage tank T, which is provided to a ship and stores ammonia to be supplied as fuel for on-board engines, such that the reliquefied boil-off gas can be returned to the storage tank or supplied as fuel. Since ammonia gas is toxic, classification regulations require increase in design pressure of a storage tank in order to allow operation without venting even at room temperature, or installation of a system capable of treating ammonia boil-off gas generated in the storage tank. The system according to this embodiment is a system capable of treating ammonia boil-off gas through reliquefaction, in which the ammonia boil-off gas generated in the storage tank is delivered to a compression unit 100 through a knock-out drum 400 to be compressed in the compression unit, cooled and condensed in a condenser 200, and recovered through a receiver 250, a heat exchanger 300, and the like.

Referring now to FIG. 2, the ammonia boil-off gas reliquefaction system according to this embodiment includes: a compression unit 100 for multistage compression of boil-off gas, which includes a first compressor 100A receiving and compressing boil-off gas generated from ammonia in a storage tank T provided to a ship and a second compressor 100B further compressing the boil-off gas compressed in the first compressor; a condenser 200 cooling the boil-off gas compressed through the compression unit; a reliquefied gas recovery line RL along which ammonia cooled and condensed in the condenser is delivered to the storage tank; and a side streamline BL along which the ammonia is partially diverted from the reliquefied gas recovery line and is supplied as boil-off gas upstream of the compression unit to be supplied to the first compressor.

The ammonia boil-off gas discharged from the storage tank T passes through the knock-out drum 400 along a gas delivery line GL such that only a gas component of the boil-off gas is supplied to the first compressor 100A. A liquid (condensate) contained in the boil-off gas may be separated by the knockout drum and discharged to a lower side of the knockout drum.

The compression unit 100 may be a two-stage compressor including the first compressor 100A receiving and compressing the boil-off gas and a second compressor 100B further compressing the boil-off gas compressed in the first compressor. The compression unit may be, for example, a two-stage centrifugal compressor including first and second compressors or a two-stage reciprocating compressor with reciprocating pistons. The number of stages of the compression unit may be increased, as needed.

The boil-off gas compressed in the compression unit 100 is supplied to the condenser 200 to be cooled therein. In the condenser 200, the boil-off gas compressed in the compression unit 100 is cooled and reliquefied, for example, through heat exchange with a cold heat source to cool the ammonia boil-off gas.

The ammonia cooled and condensed in the condenser 200 is delivered to the receiver 250 along the reliquefied gas recovery line RL to be received in a subcooled state therein. Since ammonia delivered to the receiver is in a subcooled state, no boil-off gas is generated therefrom, despite generation of some vapors by nitrogen, air, and the like. In the receiver, the gas is separated from the condensed ammonia and vented along a vent line CL and the liquid is delivered to the storage tank along the reliquefied gas recovery line RL.

The vent line CL is provided with a control valve CV, which is controlled according to an ammonia liquid level in the receiver. By controlling the control valve, the gas discharged along the vent line can be adjusted together with the ammonia liquid level inside the receiver.

The reliquefied gas recovery line RL is provided with the heat exchanger 300 downstream of the receiver to further cool the ammonia condensed in the condenser. In the system according to this embodiment, the heat exchanger may be, for example, a plate heat exchanger or a PCHE.

To ensure a cold heat source for the heat exchanger 300, the side streamline BL branches off from the reliquefied gas recovery line RL at an upstream side of the heat exchanger. The side streamline BL is provided with a first pressure relief valve JTV1 to depressurize the ammonia diverted from the reliquefied gas recovery line. An ammonia side stream branched off along the side streamline BL and cooled through depressurization in the first pressure relief valve JTV1 is supplied to the heat exchanger 300, in which the ammonia side stream is subjected to heat exchange with an ammonia main stream flowing along the reliquefied gas recovery line RL. That is, in the heat exchanger 300, the ammonia in the reliquefied gas recovery line RL is subjected to heat exchange with the ammonia that is diverted along the side streamline BL and is cooled by the first pressure relief valve JTV1. The ammonia having passed through the heat exchanger 300 along the side streamline BL is delivered to an upstream side of the compression unit and is mixed with a boil-off gas flow discharged from the storage tank to be supplied to the first compressor 100A of the compression unit through the knockout drum. In the liquefaction system according to this embodiment, cycle efficiency can be maximized by applying a plate heat exchanger or PCHE to cool the ammonia through heat exchange between the side stream and the main stream without quenching operation, and the side stream is sent back to the upstream side of the compression unit to be used for temperature regulation of the boil-off gas to be supplied to the compression unit.

The first pressure relief valve JTV1 may be controlled in a cascade control manner by comparing an ammonia discharge temperature T1 downstream of the first pressure relief valve with an ammonia discharge temperature T2 downstream of the heat exchanger on the liquefied gas recovery line.

Accordingly, the boil-off gas having passed through the knock-out drum is mixed with the depressurized ammonia to allow temperature regulation after being diverted along the side streamline BL and is compressed in the first compressor 100A. An intercooler 150 is disposed between the first compressor and the second compressor in the compression unit such that the boil-off gas compressed in the first compressor can be cooled through the intercooler 150 and supplied to the second compressor. In this way, the reliquefaction system according to this embodiment employs a two-stage compressor, in which a side stream is fed along the side streamline upstream of the compressor and the intercooler is disposed between the first and second compressors, thereby allowing regulation of the temperature of the boil-off gas while preventing overheating.

The ammonia boil-off gas compressed through the compression unit is supplied to the condenser 200 to be cooled and condensed therein, and passes through the receiver 250 and the heat exchanger 300.

The reliquefied gas recovery line RL is provided with a second pressure relief valve JTV2 that depressurizes the ammonia further cooled through the heat exchanger 300. The second pressure relief valve JTV2 is controlled by a pressure value, specifically a pressure value selected from among an ammonia discharge pressure PT1 downstream of the compression unit, that is, at the second compressor, and an ammonia pressure PT2 upstream of the second pressure relief valve.

The ammonia depressurized through the second pressure relief valve JTV2) after being cooled in the heat exchanger 300 can be returned to the storage tank T or can be delivered as engine fuel to a fuel supply line.

As described above, according to the second embodiment, it is possible to prevent waste of ammonia while maintaining the pressure of the storage tank by reliquefying boil-off gas generated from ammonia to be supplied as fuel. In particular, some of the condensed ammonia is divided and delivered to the heat exchanger to be subjected to heat exchange with a main stream of ammonia to be reliquefied, and is then delivered to an upstream side of the compression unit to regulate the temperature of the ammonia boil-off gas to be introduced into the compression unit, thereby maximizing cold heat recovery efficiency of the side stream, reducing installation costs through reduction in the number of components in the system, and contributing to securing an on-board space of the ship.

Although some embodiments have been described herein, it should be understood that these embodiments are provided by way of example only and that various modifications, changes, alterations, and equivalent embodiments can be made by those skilled in the art without departing from the spirit and scope of the invention.

## Claims

1. A system for reliquefaction of ammonia boil-off gas for ships, comprising:
a compression unit for multistage compression of boil-off gas, the compression unit comprising a first compressor receiving and compressing boil-off gas generated from ammonia in a storage tank provided to a ship, and a second compressor further compressing the boil-off gas compressed in the first compressor;
a condenser cooling the boil-off gas compressed through the compression unit; and
a reliquefied gas recovery line along which ammonia cooled and condensed in the condenser is delivered to the storage tank,
wherein a temperature of the boil-off gas in the compression unit is adjusted by partially diverting the ammonia from the reliquefied gas recovery line to be supplied to the compression unit.

2. The system for reliquefaction of ammonia boil-off gas according to claim 1, further comprising:
a temperature regulation line along which the ammonia is partially diverted from the reliquefied gas recovery line and is delivered as boil-off gas to the second compressor after compression in the first compressor;
a heat exchanger provided to the reliquefied gas recovery line and further cooling the ammonia condensed in the condenser; and
a first pressure relief valve provided to the temperature regulation line and depressurizing the ammonia diverted from the reliquefied gas recovery line,
wherein the ammonia depressurized in the first pressure relief valve is mixed with the boil-off gas downstream of the first compressor after heat exchange with the ammonia in the liquefied gas recovery line through the heat exchanger.

3. The system for reliquefaction of ammonia boil-off gas according to claim 2, wherein the first pressure relief valve is controlled in a cascade control manner by comparing an ammonia discharge temperature downstream of the first pressure relief valve on the temperature regulation line with an ammonia discharge temperature downstream of the heat exchanger on the liquefied gas recovery line.

4. The system for reliquefaction of ammonia boil-off gas according to claim 3, further comprising:
an intercooler cooling the compressed boil-off gas received from the second compressor and supplying the cooled boil-off gas to the third compressor,
wherein the compression unit is a three-stage compressor further comprising a third compressor receiving and compressing the boil-off gas compressed through the first and second compressors.

5. The system for reliquefaction of ammonia boil-off gas according to claim 1, further comprising:
a side streamline along which the ammonia is partially diverted from the reliquefied gas recovery line and is delivered as boil-off gas to the first compressor of the compression unit;
a heat exchanger provided to the reliquefied gas recovery line and further cooling the ammonia condensed in the condenser; and
a first pressure relief valve provided to the side streamline and depressurizing the ammonia diverted from the reliquefied gas recovery line,
wherein the ammonia depressurized in the first pressure relief valve is mixed with the boil-off gas upstream of the first compressor after heat exchange with the ammonia in the liquefied gas recovery line through the heat exchanger and is then fed to the first compressor.

6. The system for reliquefaction of ammonia boil-off gas according to claim 5, wherein the first pressure relief valve is controlled in a cascade control manner by comparing an ammonia discharge temperature downstream of the first pressure relief valve in the side streamline with an ammonia discharge temperature downstream of the heat exchanger on the liquefied gas recovery line.

7. The system for reliquefaction of ammonia boil-off gas according to claim 6, further comprising:
an intercooler cooling the compressed boil-off gas received from the second compressor and supplying the cooled boil-off gas to the second compressor.

8. The system for reliquefaction of ammonia boil-off gas according to claim 2 or 5, further comprising:
a receiver disposed between the condenser and the heat exchanger on the reliquefied gas recovery line and receiving the ammonia cooled in the condenser;
a vent line along which a gas separated from the receiver is discharged; and
a control valve provided to the vent line,
wherein the control valve is controlled according to an ammonia liquid level detected in the receiver to regulate the ammonia liquid level in the receiver.

9. The system for reliquefaction of ammonia boil-off gas according to claim 8, further comprising:
a second pressure relief valve provided to the reliquefied gas recovery line and depressurizing the ammonia further cooled through the heat exchanger,
wherein the second pressure relief valve is controlled depending on a value selected from among an ammonia discharge pressure downstream of the compression unit and an ammonia pressure upstream of the second pressure relief valve.

10. The system for reliquefaction of ammonia boil-off gas according to claim 9, further comprising:
a knock-out drum receiving the boil-off gas discharged from the storage tank and supplying a gas component of the boil-off gas to the first compressor of the compression unit,
wherein a liquid component contained in the boil-off gas is separated by and discharged from the knock-out drum.

11. A method for reliquefying ammonia boil-off gas for ships, comprising:
compressing boil-off gas generated from ammonia in a storage tank of a ship through multistage compression by a compression unit including a first compressor and a second compressor;
condensing, by a condenser, the boil-off gas compressed through the compression unit, followed by delivering the condensed boil-off gas to the storage tank along a reliquefied gas recovery line; and
partially diverting the ammonia from the reliquefied gas recovery line to supply the ammonia to the compression unit to regulate a temperature of the boil-off gas in the compression unit.

12. The method for reliquefying ammonia boil-off gas according to claim 11, wherein the ammonia in the reliquefied gas recovery line is partially diverted along a temperature-regulating line and is delivered as boil-off gas to the second compressor after compression in the first compressor to regulate the temperature of the boil-off gas introduced into the second compressor;
the reliquefied gas recovery line is provided with a heat exchanger further cooling the ammonia condensed in the condenser;
the temperature-regulating line branches off from the reliquefied gas recovery line upstream of the heat exchanger; and
the ammonia diverted along the temperature-regulating line is depressurized in a first pressure relief valve and is mixed with the boil-off gas downstream of the first compressor after heat exchange with the ammonia in the reliquefied gas recovery line through the heat exchanger.

13. The method for reliquefying ammonia boil-off gas according to claim 11, wherein the ammonia in the liquefied gas recovery line is partially diverted along a side streamline and is delivered as boil-off gas to the first compressor of the compression unit to regulate the temperature of the boil-off gas fed to the compression unit;
the liquefied gas recovery line is provided with a heat exchanger further cooling the ammonia condensed in the condenser;
the side streamline branches off from the reliquefied gas recovery line upstream of the heat exchanger; and
the ammonia diverted along the side streamline is depressurized in a first pressure relief valve and is mixed with the boil-off gas upstream of the compression unit and fed to the first compressor after heat exchange with the ammonia in the reliquefied gas recovery line through the heat exchanger.

14. The method for reliquefying ammonia boil-off gas according to claim 12 or 13, wherein the first pressure relief valve is controlled in a cascade control manner by comparing an ammonia discharge temperature downstream of the first pressure relief valve with an ammonia discharge temperature downstream of the heat exchanger in the liquefied gas recovery line.
